Europäisches Patentamt

European Patent Office

Office européen des brevets

(19)

(11) Numéro de publication : **0 104 118**
**B1**

(12) **FASCICULE DE BREVET EUROPÉEN**

(45) Date de publication du fascicule du brevet :
10.09.86

(51) Int. Cl.⁴ : **B 25 J 15/04**

(21) Numéro de dépôt : **83401806.1**

(22) Date de dépôt : **15.09.83**

(54) Dispositif de raccordement déconnectable d'une grenouillère sur un bras esclave de télémanipulateur et support de déconnexion correspondant.

(30) Priorité : **20.09.82 FR 8215790**

(43) Date de publication de la demande :
**28.03.84 Bulletin 84/13**

(45) Mention de la délivrance du brevet :
**10.09.86 Bulletin 86/37**

(84) Etats contractants désignés :
**BE DE GB IT**

(56) Documents cités :
**GB-A- 2 093 518**

(73) Titulaire : **LA CALHENE Société Anonyme**
**5, rue Emile Zola**
**F-95870 Bezons (FR)**

**COMMISSARIAT A L'ENERGIE ATOMIQUE Etablissement de Caractère Scientifique Technique et Industriel**
**31/33, rue de la Fédération**
**F-75015 Paris (FR)**

(72) Inventeur : **Frioux, Christian**
**6, rue Charles Lindbergh**
**F-41100 Vendome (FR)**
Inventeur : **Glachet, Charles**
**42, rue du Maréchal de Rochambeau**
**F-41100 Vendome (FR)**
Inventeur : **Francois, Daniel**
**227, rue des Ruelles**
**F-41100 Vendome (FR)**
Inventeur : **Tentelier, Jean**
**27, rue de Verdun La Ville aux Clercs**
**F-41160 Moree (FR)**

(74) Mandataire : **Mongrédien, André et al**
**c/o BREVATOME 25, rue de Ponthieu**
**F-75008 Paris (FR)**

EP 0 104 118 B1

Jouve, 18, rue St-Denis, 75001 Paris, France

## Description

La présente invention se rapporte à un dispositif de raccordement déconnectable d'une genouillère de supportage d'un organe de préhension à l'extrémité d'un bras esclave de télémanipulateur ainsi qu'à un support de déconnexion prévu pour recevoir la genouillère et son organe de préhension afin d'assurer automatiquement la connexion et la déconnexion à distance du dispositif de raccordement reliant la genouillère au bras esclave.

Afin d'effectuer des manipulations à l'intérieur d'une cellule devant être isolée de l'atmosphère externe, notamment parce que le milieu contenu dans la cellule est un milieu toxique ou dangereux tel qu'un milieu radioactif, on a l'habitude d'utiliser différents moyens de manipulation à distance parmi lesquels on trouve les télémanipulateurs dits maître-esclave. Ces télémanipulateurs se caractérisent par le fait qu'ils comprennent, à l'extérieur de la cellule, un bras maître articulé et/ou télescopique portant à son extrémité une poignée de commande et, à l'intérieur de la cellule, un bras esclave identique ou semblable au bras maître et portant à son extrémité, par l'intermédiaire d'une genouillère, un organe de préhension constitué le plus souvent par une pince.

Dans ces télémanipulateurs, des moyens mécaniques ou électriques sont prévus pour qu'à tout mouvement effectué sur le bras maître par un opérateur corresponde un mouvement identique ou semblable du bras esclave. De plus, la poignée de commande est munie d'un organe d'actionnement tel qu'une gâchette permettant de commander, par l'intermédiaire de moyens mécaniques ou électriques, la fermeture de la pince de préhension, son ouverture pouvant être soit commandée de la même manière, soit réalisée automatiquement à l'aide de moyens élastiques incorporés à la pince.

A titre d'exemple, la transmission des différents mouvements entre le bras maître et le bras esclave peut notamment être réalisée au moyen de rubans ou de câbles s'enroulant sur des poulies et dont les déplacements sont commandés par des cabestans.

On comprend que les télémanipulateurs maître-esclave constituent des mécanismes complexes nécessitant périodiquement des interventions afin d'en changer certaines pièces. Lorsque les pièces se trouvent du côté du bras maître, ces interventions ne posent aucun problème particulier. En revanche, toute intervention devant être effectuée du côté du bras esclave met en œuvre un processus très précis rendu nécessaire à la fois par la nécessité de préserver le confinement de la cellule et par la contamination de certaines pièces lorsqu'on travaille en atmosphère radioactive.

Pour tenir compte notamment de ce dernier point, le bras esclave est généralement disposé à l'intérieur d'une manchette de protection limitant sa contamination, alors que la genouillère et l'organe de préhension sont disposés sans protection à l'intérieur de l'enceinte.

Afin de réserver aux interventions sur les pièces fortement contaminées (genouillères et organe de préhension) un traitement différent de celui des pièces faiblement contaminées (segments du bras esclave), on a imaginé de dissocier l'ensemble genouillère-organe de préhension du reste du bras esclave. Ainsi, lorsque l'intervention doit être effectuée sur la genouillère ou sur l'organe de préhension, la déconnexion de cet ensemble d'encombrement relativement réduit permet de le transporter dans un château de transport en plomb jusqu'à une cellule d'intervention appropriée, où il peut être traité sans risque de contamination. Au contraire, lorsque l'intervention concerne le bras proprement dit, comme c'est plus fréquemment le cas, la déconnexion de l'ensemble genouillère-organe de préhension permet de laisser ces pièces contaminées sur un support à l'intérieur de la cellule, alors que le bras esclave protégé par sa manchette est sorti du côté du bras maître selon un processus bien connu des spécialistes.

Dans les installations existant actuellement et qui possèdent un tel dispositif de raccordement déconnectable par lequel la genouillère est fixée à l'extrémité du bras esclave, ce dispositif est un dispositif à baïonnette nécessitant de faire tourner par rapport au bras, une bague portée par la genouillère, dans l'un ou l'autre sens selon qu'on désire la connecter ou la déconnecter.

Bien que ce dispositif fonctionne de façon satisfaisante, il présente l'inconvénient notoire de nécessiter la présence d'un second télémanipulateur ou au moins d'un organe moteur tel qu'un vérin à l'intérieur de la cellule afin de commander la rotation de la genouillère. Cette caractéristique n'est pas satisfaisante, car il est clair que la présence d'un second télémanipulateur est hautement pénalisante pour le coût et pour l'encombrement de la cellule. D'autre part, le recours à un dispositif moteur d'appoint tel qu'un vérin n'est pas non plus satisfaisant, car il conduit à multiplier les risques d'avoir à intervenir à l'intérieur de la cellule pour réparer une pièce défectueuse. En outre, elle met l'opérateur à la merci d'une panne de ce dispositif moteur rendant totalement impossible toute connexion ou déconnexion du dispositif de raccordement. De plus, elle multiplie également les traversées de la paroi de la cellule nécessaires pour commander de l'extérieur ce dispositif moteur, ce qui est pénalisant du point de vue du confinement et du coût.

La présente invention a précisément pour objet un dispositif de raccordement déconnectable particulièrement simple et ne présentant pas les inconvénients des dispositifs connus, le dispositif selon l'invention permettant notamment de connecter ou de déconnecter la genouillère sans qu'il soit nécessaire d'avoir recours à un autre télémanipulateur ou à un moteur d'appoint et même dans le cas où les moyens de commande des différents mouvements de la pince et le mouvement azimut sont hors d'usage.

A cet effet et conformément à l'invention, il est proposé un dispositif de raccordement déconnectable d'une genouillère de supportage d'un organe de préhension à l'extrémité d'un bras esclave de télémanipulateur, ledit bras et ladite genouillère comprenant chacun un boîtier dans lequel sont logés des moyens de transmission de mouvements à l'organe de préhension, ce dispositif de raccordement étant caractérisé en ce qu'il comprend au moins deux loquets montés de façon pivotante sur l'un des boîtiers, ces loquets étant aptes à occuper une position de raccordement dans laquelle ils sont en appui sur des doigts fixés sur l'autre boîtier, de façon à raccorder la genouillère à l'extrémité du bras, et à occuper une position dans laquelle ils sont dégagés de ces doigts afin de déconnecter la genouillère, des moyens de verrouillage escamotables immobilisant normalement les loquets par rapport au boîtier qui les supporte lorsque ces loquets occupent ladite position de raccordement.

Grâce à la disposition ainsi définie, la connexion et la déconnexion de la genouillère peuvent être obtenues par un simple basculement des loquets. On comprendra aisément que ce basculement ainsi que l'effacement des moyens de verrouillage escamotables peuvent être obtenus à l'aide d'un support de déconnexion comportant des surfaces de butée pour assurer le basculement des loquets et des bras pour escamoter les moyens de verrouillage, sans qu'il soit nécessaire d'avoir recours à un organe moteur ou à un second télémanipulateur à l'intérieur de la cellule.

Dans un mode de réalisation préféré de l'invention, les loquets sont montés sur le boîtier de la genouillère et les doigts sont fixés au boîtier du bras.

Afin d'accroître encore la simplicité et le faible coût du dispositif de raccordement selon l'invention, lorsque les moyens de transmission de mouvements logés dans le boîtier du bras sont à chaîne ou à ruban, chacun de ces derniers est reçu à l'extrémité du bras sur une roue dentée ou une poulie solidaire d'un pignon qui vient s'engréner sur un pignon correspondant logé dans le boîtier de la genouillère.

De préférence, les moyens de verrouillage comprennent des tiges escamotables portées par le boîtier supportant les loquets et sollicitées par des moyens élastiques dans des trous formés dans les loquets et placés en vis-à-vis desdites tiges lorsque les loquets occupent ladite position de raccordement.

L'invention a également pour objet un support de déconnexion du dispositif de raccordement défini précédemment.

Selon l'invention, ce support est caractérisé en ce qu'il comprend un bloc support de genouillère portant des moyens de positionnement de la genouillère, et au moins deux pièces susceptibles d'être déplacées entre une position de connexion et une position de déconnexion au moyen d'un levier, lesdites pièces présentant des surfaces de butée aptes à coopérer avec les loquets du dispositif de raccordement pour déplacer ces derniers vers la position de raccordement lorsqu'on veut sortir la genouillère du support et que lesdites pièces sont en position de connexion, et vers la position inverse lorsqu'on introduit la genouillère dans le support et que lesdites pièces sont en position de déconnexion. le support comprenant de plus des moyens pour escamoter les moyens de verrouillage lorsque la genouillère est dans le support.

De préférence, les moyens pour escamoter les moyens de verrouillage comprennent des bras sollicités en appui contre les loquets par des moyens élastiques, de façon à amener une extrémité bombée des tiges escamotables à l'intérieur des trous formés dans les loquets, de telle sorte que les loquets peuvent alors tourner librement par rapport au boîtier que les supporte.

Conformément à une autre caractéristique de l'invention, lesdites pièces et le levier sont montés pivotants sur le bloc support de genouillère, le levier portant au moins deux excentriques contre lesquels lesdites pièces sont maintenues en appui par des moyens élastiques, de telle sorte que les pièces occupent soit la position de connexion, soit la position de déconnexion, selon la position occupée par le levier. Afin que la manipulation de ce levier soit possible, même en cas de défaillance des commandes des mouvements de la pince, les pièces occupent la position de déconnexion lorsque le levier est en position haute et la position de connexion lorsque le levier est en position basse.

Conformément à encore une autre caractéristique de l'invention, les moyens de positionnement comprennent des encoches dans lesquelles sont reçus des doigts formés sur la genouillère.

On décrira maintenant, à titre d'exemple non limitatif, un mode de réalisation particulier de l'invention en se référant aux dessins annexés dans lesquels :

la figure 1 est une vue de côté montrant l'extrémité inférieure du bras esclave d'un télémanipulateur portant une pince de préhension par l'intermédiaire d'une genouillère fixée à l'extrémité du bras à l'aide du dispositif de raccordement selon l'invention, la genouillère et la pince étant sur le point d'être introduites dans un support de déconnexion approprié également réalisé conformément aux enseignements de l'invention,

la figure 2 est une vue de face, en coupe longitudinale à plus grande échelle du dispositif de raccordement déconnectable selon l'invention,

la figure 3 est une vue de côté et à plus grande échelle de la genouillère et de la partie correspondante du support de déconnexion lorsque la genouillère a été introduite dans le support,

la figure 4 est une vue comparable à la figure 2 montrant les bras du support de déconnexion servant à déconnecter les tiges de verrouillage des loquets du dispositif de raccordement, et

la figure 5 est une vue à plus grande échelle montrant les tiges escamotables et les bras du support servant à les effacer.

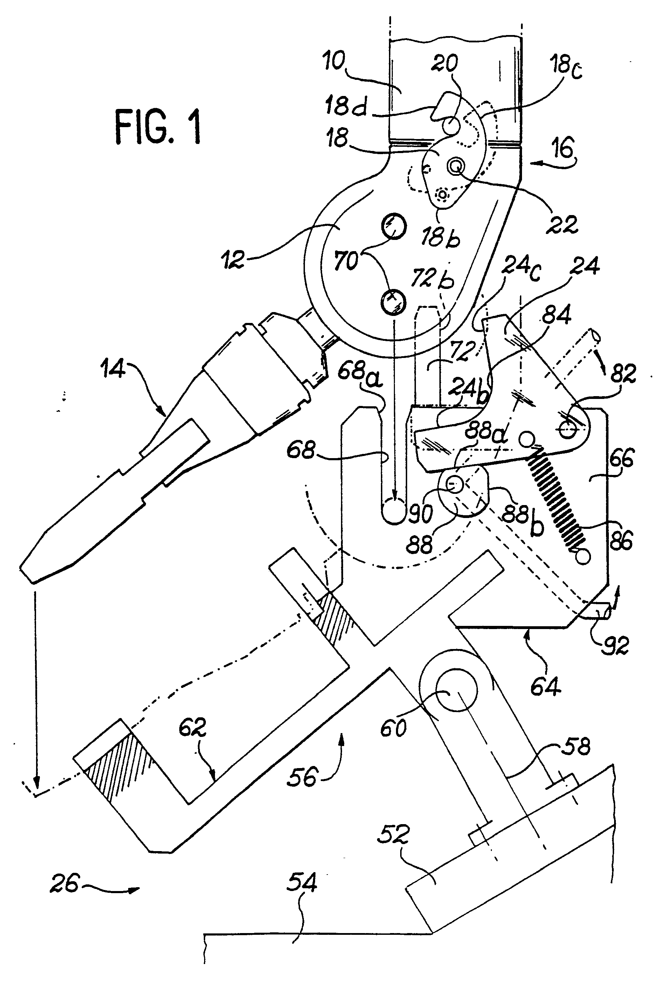

En se référant tout d'abord à la figure 1, on voit l'extrémité du bras esclave 10 d'un télémanipulateur maître-esclave d'un quelconque type connu. Comme on l'a mentionné précédemment, ce bras esclave peut être soit articulé, soit télescopique. Ce bras 10 porte à son extrémité une genouillère 12 assurant à la fois le supportage et l'orientation d'une pince de préhension 14 qui peut être constituée par tout organe de préhension connu permettant d'accomplir l'opération envisagée. De façon connue, la genouillère 12 permet notamment de faire pivoter la pince 14 autour d'un axe perpendiculaire à l'axe du bras 10 (mouvement d'élévation de la pince), autour de son axe propre (mouvement de rotation de la pince), et elle sert également à transmettre le mouvement de serrage de la pince.

Conformément à l'invention, la genouillère 12 est fixée à l'extrémité du bras esclave 10 au moyen d'un dispositif de raccordement déconnectable 16.

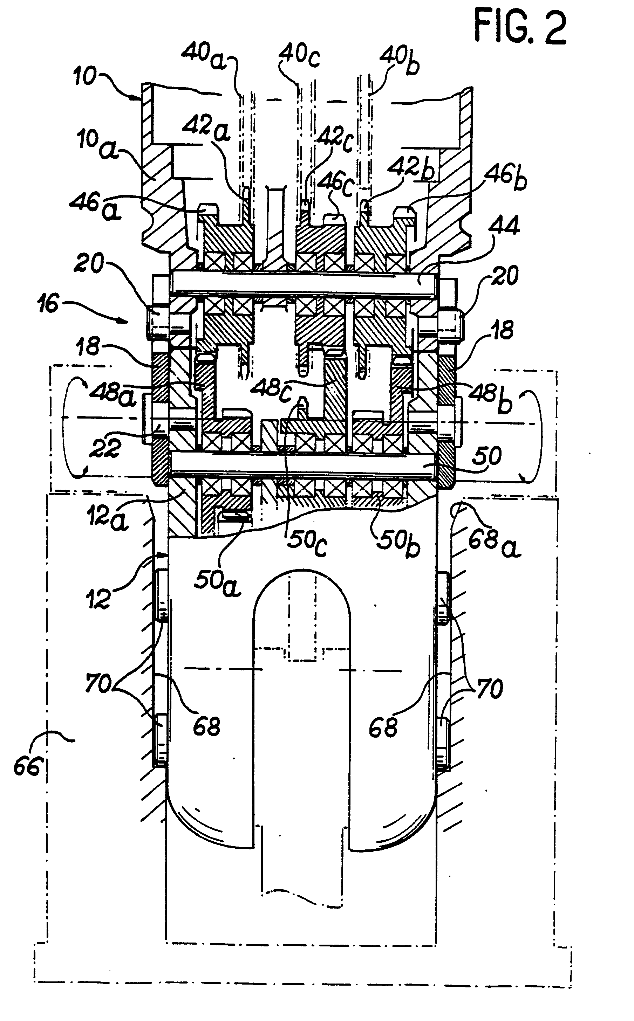

Sur la figure 2, on voit que ce dispositif de raccordement 16 comprend deux loquets 18 montés pivotants à l'extérieur du boîtier 12a de la genouillère et deux doigts 20 fixés sur le boîtier 10a du segment inférieur du bras esclave 10, de façon à faire saillie à l'extérieur de ce boîtier. De façon plus précise et comme l'illustrent notamment les figures 1 à 3, chacun des loquets 18 est constitué par une tôle plane découpée de façon à présenter un évidement en forme de crochet 18a apte à venir coiffer le doigt 20 correspondant, de manière à former une butée maintenant le boîtier 12a de la genouillère serrée contre le boîtier 10a du dernier segment du bras esclave afin d'assurer la connexion de ces deux pièces comme l'illustre la figure 1.

De préférence et comme l'illustre la figure 2, les loquets 18 sont montés sur les faces latérales planes et parallèles du boîtier 12a de la genouillère autour de deux axes de pivotement coaxiaux 22, de telle sorte que les plans définis par les plaques constituant les loquets 18 soient parallèles entre eux. Bien entendu, les doigts 20 sont alors également disposés de part et d'autre du boîtier 10a et ils sont également disposés dans le prolongement l'un de l'autre, c'est-à-dire coaxialement lorsqu'ils ont une section circulaire comme on l'a représenté sur les figures.

Comme on le verra ultérieurement, la forme des loquets 18 est conçue de façon à permettre la commande automatique du pivotement de ces loquets autour de leurs axes 22 par coopération avec des pièces 24 d'un support de réception 26 de la pince 14 et de sa genouillère 12. Toutefois, il est également nécessaire d'empêcher qu'un tel pivotement des loquets 18 n'intervienne de façon accidentelle au cours d'une manipulation et ne conduise à la déconnexion du dispositif 16 avec toutes les conséquences néfastes qui en résulteraient. A cet effet, on a prévu d'équiper le dispositif de raccordement 16 de moyens de verrouillage assurant normalement le maintien des loquets 18 dans la position de raccordement de la genouillère 12 et du bras 10 représentée en trait plein sur la figure 1. Afin de permettre le démontage automatique du dispositif de raccordement 16 lors de l'introduction de la genouillère et de la pince dans le support 26, il est également nécessaire que ces moyens de verrouillage soient escamotables.

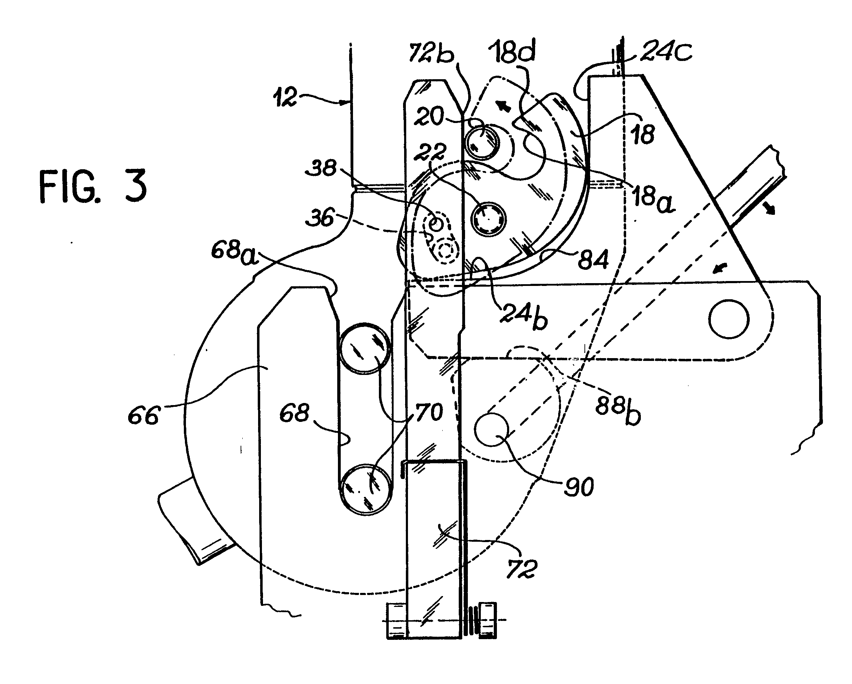

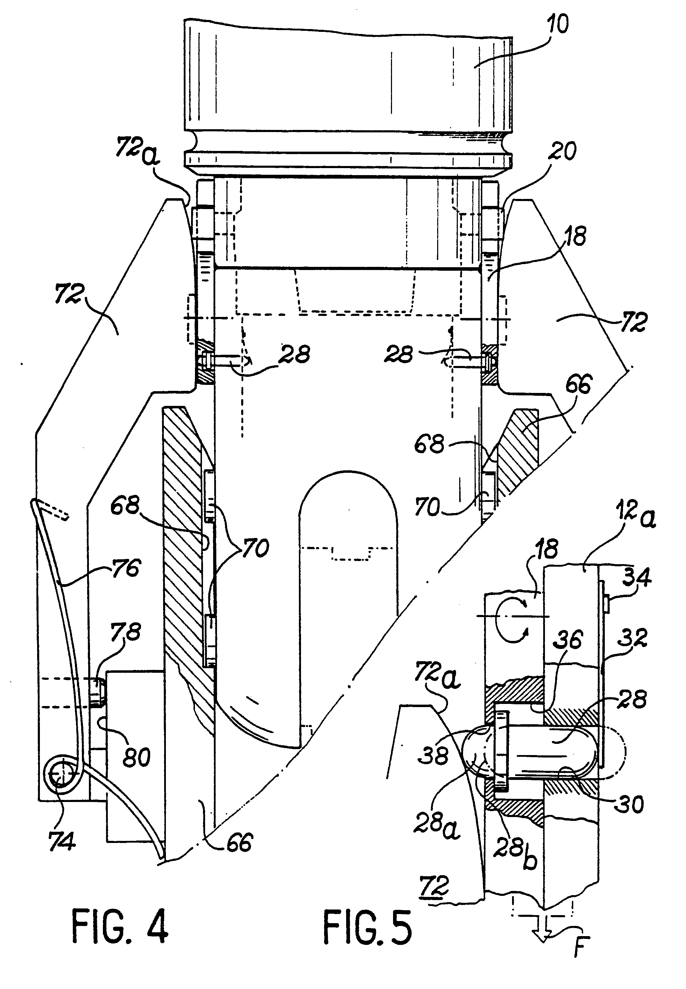

A cet effet et comme le montre plus précisément la figure 5, ces moyens de verrouillage comprennent, pour chacun des loquets 18, une tige escamotable 28 apte à coulisser parallèlement à l'axe de pivotement 22 dans un alésage 30 du boîtier 12a de la genouillère. Cette tige 28 est sollicitée élastiquement par un ressort à lame 32, fixée en 34 à l'intérieur du boîtier 12a de la genouillère, dans une rainure en arc de cercle 36 formée sur la face interne du loquet 18 de manière à permettre son pivotement autour de son axe 22 comme l'illustre la figure 3.

On voit sur les figures 3 et 5 que chaque loquet 18 présente en outre un trou 38 qui traverse la paroi définie entre le fond de la rainure 36 et la face externe du loquet, de façon à permettre le passage de l'extrémité bombée 28a de la tige 28 lorsque le loquet occupe la position de connexion représentée en trait plein sur la figure 1. Une collerette 28b de la tige 28 vient alors en appui sur le fond de la rainure 36 comme l'illustre la figure 5.

Dans cette position, il est important de remarquer que la partie de l'extrémité 28a de la tige qui se trouve à l'intérieur du trou 38 est sensiblement cylindrique, alors que l'extrémité bombée fait saillie au-delà de la face externe du loquet. Grâce à cette caractéristique, on comprend que tout mouvement tendant à faire tourner le loquet autour de son axe 22 est empêché par l'appui de la partie cylindrique de l'extrémité 28a sur la face interne du trou 38. Au contraire, il est clair qu'il suffit d'effacer les doigts 28 à l'encontre de la force exercée par le ressort 32 jusqu'à ce que l'extrémité bombée 28a affleure la face externe du loquet 18 pour que le pivotement des loquets soit rendu possible. En effet, la longueur de la partie bombée est supérieure à la longueur du trou 38.

Afin de permettre la commande du pivotement des loquets 18 à l'aide des pièces 24 du support 26, on a mentionné précédemment qu'il était souhaitable de donner au loquet une forme particulière. Ainsi, comme l'illustrent notamment les figures 1 et 3, chacun des loquets 18 comporte du côté opposé à l'évidement 18a en forme de crochet par rapport à l'axe 22 une surface de came 18b apte à faire tourner le loquet 18 dans le sens permettant de dégager l'évidement 18a du doigt 20 (c'est-à-dire dans le sens des aiguilles d'une montre en considérant les figures 1 et 3) lorsque cette surface 18b vient en appui contre une surface de butée appropriée telle qu'une surface 24b formée sur la pièce correspondante 24 du support. Ce résultat est obtenu par le fait que la surface de came 18b est formée à la partie inférieure du loquet, et du côté de l'ouverture de l'évidement 18a en forme de crochet, par rapport au plan joignant les axes géométriques de l'axe 22 et du doigt 20 correspondant.

De façon comparable, la face externe de la partie du loquet 18 dans laquelle est formé l'évidement 18a constitue une surface de came 18c apte à faire pivoter le loquet autour de son axe 22 dans le sens permettant d'amener l'évidement 18a sur le doigt 20 (c'est-à-dire dans le sens inverse des aiguilles d'une montre en considérant les figures 1 et 3) lorsque cette surface 18c vient en butée contre une surface de butée appropriée telle que 24c formée sur la pièce 24 correspondante du support.

Afin de terminer la description du dispositif de raccordement 16, on se réferera à nouveau à la figure 2 sur laquelle on a représenté les moyens permettant de raccorder à ce niveau les mécanismes de transmission des mouvements de la pince. Comme on l'a mentionné précédemment, ces mouvements sont au nombre de trois dans le mode de réalisation représenté, à savoir le mouvement d'élévation de la pince autour d'un axe normal à l'axe du bras, le mouvement de rotation de la pince autour de son axe propre, et le mouvement de serrage de la pince, le mouvement de desserrage étant réalisé automatiquement à l'aide d'un ou plusieurs ressorts logés directement dans la pince.

La transmission de ces trois mouvements à l'intérieur du boîtier 10a peut notamment être réalisée à l'aide de trois chaînes 40a, 40b, 40c qui sont reçues à l'extrémité inférieure du bras 10 sur trois roues dentées 42a, 42b, 42c montées de façon tournante sur un même axe 44 porté par le boîtier 10a. Chacune des roues dentées 42a, 42b, 42c est solidaire d'un pignon 46a, 46b, 46c apte à venir s'engréner dans un pignon correspondant 48a, 48b, 48c monté de façon tournante sur un même axe 50 porté par le boîtier 12a de la genouillère. Les deux pignons externes 48a et 48b sont eux-mêmes solidaires d'un pignon 50a, 50b respectivement, alors que le pignon central 48c est solidaire d'une roue dentée 50c sur laquelle est reçue une chaîne (non représentée) servant à commander la fermeture de la pince. Les pignons 50a et 50 b s'engrènent de façon connue sur d'autres pignons (non représentés), de telle sorte que la rotation dans le même sens des pignons 50a et 50b commande le mouvement d'élévation de la pince alors que la rotation de ces pignons en sens inverse commande le mouvement de rotation de la pince.

La description qui précède fait apparaître que le raccordement des moyens de transmission des mouvements au niveau du dispositif 16 s'effectue de la même manière pour chacun des mouvements à transmettre et de façon particulièrement simple puisqu'il est obtenu par un simple engrènement de deux pignons pour chaque mouvement. Il est ainsi possible, comme l'illustre la figure 2, de localiser avec une bonne précision la surface de joint à proximité immédiate des extrémités des boîtiers 10a et 12a.

On décrira maintenant en se référant plus précisément aux figures 1, 3 et 4 le support de déconnexion prévu pour recevoir la genouillère 12 et la pince 14 lorsque le télémanipulateur est équipé du dispositif de raccordement 16 selon l'invention.

On voit tout d'abord en se référant à la figure 1 que le support 26 comporte une semelle 52 pouvant être posée ou fixée en tout endroit approprié à l'intérieur de l'enceinte et notamment sur une cloison 54 de celle-ci. La pièce de supportage proprement dite 56 est montée sur la semelle 52 de façon à pouvoir être orientée à volonté par exemple autour d'un axe 58 perpendiculaire à la semelle et autour d'un axe 60 orthogonal à l'axe 58. La pièce de supportage 56 comporte tout d'abord et de façon connue un bloc support de pince 62 adapté à la forme de la pince 14 de façon à pouvoir supporter celle-ci dans la position de référence identique à celle définie sur la genouillère maître brochée.

Conformément à l'invention, la pièce 56 comprend en outre, en arrière du bloc support 62, un bloc support de genouillère 64 comportant deux plaques verticales parallèles 66 (figures 2 et 4). On voit notamment sur les figures 1 à 4 que les plaques 66 sont prévues pour venir se placer de part et d'autre de la genouillère 12 et pour positionner parfaitement celle-ci afin d'assurer le bon fonctionnement des moyens permettant de connecter et de déconnecter le dispositif de raccordement 16 et des moyens permettant d'escamoter les tiges 28. A cet effet, l'écartement entre les plaques est légèrement supérieur à l'épaisseur de la genouillère entre ses faces latérales planes. De plus, chacune des plaques 66 comporte sur sa face interne une rainure verticale 68 dans laquelle viennent se loger successivement deux broches 70 formées sur chacune des faces latérales du boîtier de la genouillère. Afin de faciliter le positionnement, on voit sur les figures 1 à 3 que les rainures 68 sont légèrement évasées en 68a à leurs extrémités supérieures.

Le bloc support de genouillère 64 comporte également des moyens pour effacer automatiquement les tiges 28 de façon à ce que leurs extrémités bombées 28a viennent en affleurement avec la face externe du loquet correspondant 18 quand la genouillère est reçue dans le bloc support. On voit sur les figures 3 à 5 que ces moyens sont constitués par deux bras 72 qui sont montés sur les faces externes des plaques 66 de façon à pouvoir pivoter autour de deux axes horizontaux 74 parallèles aux plaques 66. Un ressort de torsion 76 prenant appui simultanément sur la plaque 66 et sur le bras 72 correspondant sollicite l'extrémité de ce dernier en appui contre la face externe du loquet 18 correspondante, lorsque la genouillère 12 est reçue dans le support. De façon plus précise, les bras 72 se trouvent alors en face des tiges escamotables 28, et la force exercée par les ressorts 76 est sensiblement supérieure à la force exercée par le ressort à lame 32, de telle sorte que les tiges 28 sont escamotées et que leur extrémité bombée 28a effleure la face externe du loquet 18 correspondant, autorisant ainsi la rotation de ce dernier.

Lorsque la genouillère 12 n'est pas encore introduite dans le bloc support 64, des butées 78 solidaires des bras 72 viennent en appui sur des surfaces de butée 80 formées sur les plaques 66, de manière à limiter le débattement des bras 72. De plus, les surfaces des bras qui viennent en appui sur les loquets sont évasées en 72a à leur extrémité supérieure. Ainsi, au fur et à mesure qu'on introduit la genouillère (flèche F sur la figure 5), les bras 72 effacent progressivement les tiges 28 pour les faire passer de la position de verrouillage représentée en trait plein sur la figure 5 à la position rétractée représentée en traits mixtes.

Conformément à l'invention, le bloc support de genouillère 64 est également muni de moyens simples aptes à occuper deux positions permettant de réaliser automatiquement la déconnexion du dispositif de raccordement 16 lorsqu'on introduit la genouillère et la pince dans le support ou au contraire la connexion de ce dispositif de raccordement lorsqu'on vient chercher la pince et la genouillère à l'aide d'un bras esclave 10 approprié.

Ces moyens se composent principalement, comme on l'a déjà mentionné sommairement au cours de la description du dispositif de raccordement, de deux pièces 24 qui sont montées pivotantes sur les faces internes des plaques 66 autour de deux axes 82 disposés de façon coaxiale. Les pièces 24 sont constituées par des plaques planes parallèles portant à l'opposé de l'axe d'articulation 82 un décrochement en forme de V arrondi 84 dans lequel vient se placer le loquet 18 correspondant. De façon plus précise, les deux branches sensiblement rectilignes et à 90° du décrochement 84 définissent respectivement les surfaces de butée 24b et 24c aptes à venir en appui sur les surfaces de came 18b et 18c des loquets 18.

Les deux pièces 24 sont sollicitées vers le bas autour de leurs axes 82 par un ressort de traction 86 dont les extrémités sont fixées par des tiges respectivement aux pièces 24 et aux plaques 66. Chacune des pièces 24 est ainsi amenée en appui contre un excentrique 88 monté de façon tournante sur la plaque 66 correspondante par un axe 90. De façon plus précise, chacun des excentriques 88 comporte deux surfaces planes 88a et 88b décalées angulairement l'une par rapport à l'autre et disposées à une distance différente de l'axe 90, de telle sorte que la position·des pièces pivotantes 24 autour de leurs axes 82 est différente selon que ces pièces sont en appui contre les surfaces 88a ou 88b sous l'action du ressort 86. Un levier d'assez grande dimension 92 est fixé aux excentriques 88 afin de permettre la commande de la rotation de ceux-ci autour de leurs axes 90.

Si l'on se réfère à la figure 3, on voit que lorsque le levier 92 est en position haute, les pièces 24 sont en appui contre la surface 88b de l'excentrique la plus éloignée de l'axe 90. La branche inférieure 24b de l'évidement 84 est alors en position haute et pratiquement à l'horizontale. Au contraire, la branche supérieure 24c de l'évidement 84 est pratiquement à la verticale. Cette position correspond à l'introduction de la genouillère 12 et de la pince 14 dans le support et permet de commander automatiquement la déconnexion du dispositif 16 comme l'illustre la figure 3.

En effet, on voit sur cette figure que la position sensiblement horizontale de la surface 24b lui permet de venir en butée contre la surface 18b du loquet avant que la genouillère ne soit introduite en totalité dans son support. Ce contact entre les surfaces 18b et 24b tend à faire tourner le loquet 18 dans le sens des aiguilles d'une montre en considérant la figure 3. Compte tenu de la position sensiblement verticale de la surface 24c, ce pivotement du loquet n'est pas empêché par cette surface. On comprend que lorsque la genouillère est totalement engagée dans son bloc support 64, l'évidement en forme de crochet 18a formé dans les loquets est dégagé des doigts 20, de telle sorte que le dispositif de raccordement 16 est déconnecté et que le bras 10 démuni de la genouillère et de la pince peut être dégagé. Bien entendu, il faut se rappeler que le pivotement des loquets 18 est alors possible puisque les bras 72 ont effacé les tiges 28 à l'intérieur des loquets.

Au contraire, comme on l'a représenté sur la figure 1, lorsque le levier 92 est en position basse, les pièces 24 sont en appui sur les surfaces 88a les plus proches des axes 90. Les surfaces 24b et 24c de l'évidement 84 sont alors inclinées d'un certain angle, dans le sens inverse des aiguilles d'une montre, par rapport à la position illustrée sur la figure 3. En particulier, l'extrémité supérieure de la surface 24c est alors en surplomb par rapport à l'extrémité inférieure de cette surface.

Cette position permet d'assurer la connexion automatique du dispositif de raccordement 16 lorsqu'on vient chercher la genouillère 12 et sa pince 14 à l'aide d'un bras approprié. Il faut se rappeler que les loquets 18 occupent la position représentée en trait plein sur la figure 3 après l'introduction de la genouillère dans le support. Le basculement du levier 92 a d'abord pour effet de provoquer le pivotement des loquets 18 dans le sens inverse des aiguilles d'une montre (figure 1), par suite de la coopération de la surface 24c avec la surface de came 18c. Ce pivotement n'empêche pas la venue en butée du boîtier du bras 10 contre celui de la genouillère.

Lorsque le bras 10 continue à descendre, les doigts 20 prennent appui sur les rebords 72b des bras 72 faisant face à la surface 24c. Simultanément, ils viennent en appui sur des bords inclinés 18d formés à l'extrémité supérieure de chacun des loquets 18, de façon à provoquer le basculement de ces derniers dans le sens des aiguilles d'une montre. Ce mouvement est autorisé grâce à la présence des ressorts de rappel 86 des pièces 24.

Lorsque les boîtiers du bras 10 et de la genouillère 12 sont en contact, les doigts 20 se trouvent en face des évidements 18a des loquets et les pièces 24 agissent par leurs surfaces 24c pour pousser les loquets jusqu'en position de verrouillage.

La sortie de la genouillère effectuée ensuite en soulevant le bras 10 a pour effet de renforcer le verrouillage par suite du glissement de la surface de came 18c sur la surface 24c. Cette opération se termine par le verrouillage automatique du dispositif de raccordement qui résulte à la fois de la venue en vis-à-vis des tiges 28 avec les trous 38 et du fait que les tiges 28 sont alors dégagées des bras 72.

Pour compléter la description qui précède, on notera que, conformément au but essentiel de l'invention, le levier 92 peut être manœuvré sans qu'il soit nécessaire de faire appel à un second télémanipulateur ou à tout autre dispositif moteur. En effet, avant d'introduire la genouillère et sa pince dans le support, il est aisé pour l'opérateur de venir pousser le levier 92 avec la pince même dans le cas où le télémanipulateur présente des défaillances importantes et en particulier lorsque tous les mouvements de la pince (élévation, rotation, serrage et azimut, c'est-à-dire rotation de l'ensemble autour de l'axe du bras) sont rendus impossibles pour une raison quelconque. Ainsi, le levier 92 peut toujours être placé en position haute afin d'assurer la déconnexion automatique lors de l'introduction de la genouillère dans le support. De même, lorsque l'opérateur vient rechercher la genouillère à l'aide d'un bras nu, il peut avec l'extrémité de ce bras venir appuyer sur le levier 92 pour le faire basculer en position basse sans aucune difficulté.

Bien entendu, l'invention n'est pas limitée au mode de réalisation qui vient d'être décrit à titre d'exemple mais en couvre toutes les variantes définies par les revendications. En particulier, on comprendra que les moyens de transmission des mouvements peuvent être différents des moyens décrits et peuvent aussi être constitués notamment par des rubans ou par des câbles sans sortir du cadre de l'invention. Par ailleurs, les loquets et les doigts qui leur correspondent, ainsi que les pièces du support assurant le basculement des loquets peuvent être plus de deux, même si la réalisation décrite est évidemment la plus simple. La disposition des loquets et des doigts respectivement sur la grenouillère pourrait également être inversée. Toutefois, la configuration du support de déconnexion s'en trouverait compliquée. Enfin, le verrouillage des loquets 18 pourrait être commandé par tout autre moyen que ceux qui viennent d'être décrits. En particulier, on pourrait utiliser la commande de fermeture de la pince, qui devient opérante dès que les boîtiers de la genouillère et du bras sont en contact, pour faire basculer les pièces 24 (par exemple au moyen de câbles ou de tout dispositif analogue reliant les mors de la pince à ces pièces), de façon à verrouiller les loquets 18.

## Revendications

1. Dispositif de raccordement déconnectable d'une genouillère (12) de supportage d'un organe de préhension (14) à l'extrémité d'un bras esclave (10) de télémanipulateur, ledit bras et ladite genouillère comprenant chacun un boîtier (10a, 12a) dans lequel sont logés des moyens de transmission de mouvements (40a, 40b, 40c ; 50a, 50b, 50c) à l'organe de préhension, ce dispositif de raccordement étant caractérisé en ce qu'il comprend au moins deux loquets (18) montés de façon pivotante sur l'un (12a) des boîtiers, ces loquets étant aptes à occuper une position de raccordement dans laquelle ils sont en appui sur des doigts (20) fixés sur l'autre boîtier (10a), de façon à raccorder la genouillère à l'extrémité du bras, et à occuper une position dans laquelle ils sont dégagés de ces doigts afin de déconnecter le genouillère, des moyens de verrouillage escamotables (28) immobilisant normalement les loquets par rapport au boîtier qui les supporte lorsque ces loquets occupent ladite position de raccordement.

2. Dispositif selon la revendication 1, caractérisé en ce que les loquets (18) sont montés sur le boîtier (12a) de la genouillère et en ce que les doigts (20) sont fixés au boîtier (10a) du bras.

3. Dispositif selon l'une quelconque des revendications 1 et 2, caractérisé en ce que, les moyens de transmission de mouvements (40a, 40b, 40c) logés dans le boîtier du bras à chaîne ou à ruban, chacun de ces derniers est reçu à l'extrémité du bras sur une roue dentée (42a, 42b, 42c) ou une poulie solidaire d'un pignon (46a, 46b, 46c) qui vient s'engrener sur un pignon correspondant (48a, 48b, 48c) logé dans le boîtier de la genouillère et relié au moyen de transmission de mouvement correspondant (50a, 50b, 50c) logé dans le boîtier de la genouillère.

4. Dispositif selon l'une quelconque des revendications précédentes, caractérisé en ce que les moyens de verrouillage comprennent des tiges escamotables (28) portées par le boîtier (12a) supportant les loquets et sollicités par des moyens élastiques (32) dans des trous (38) formés dans les loquets et placés en vis-à-vis desdites tiges lorsque les loquets occupent ladite position de raccordement.

5. Support de déconnexion du dispositif de raccordement selon l'une quelconque des revendications précédentes, caractérisé en ce qu'il comprend un bloc support de genouillère (64) portant des moyens de positionnement (68) de la genouillère, et au moins deux pièces (24) susceptibles d'être déplacées entre une position de connexion et une position de déconnexion au moyen d'un levier (92), lesdites pièces présentant des surfaces de butée (24b, 24c) aptes à coopérer avec les loquets (18) du dispositif de raccordement pour déplacer ces derniers vers la position de raccordement lorsqu'on veut sortir la genouillère du support et que lesdites pièces sont en position de connexion, et vers la position inverse lorsqu'on introduit la genouillère dans le support et que lesdites pièces sont en position de déconnexion, le support comprenant de plus des moyens (72) pour escamoter les moyens de verrouillage (28) lorsque la genouillère est dans le support.

6. Support selon la revendication 5, pris en combinaison avec la revendication 4, caractérisé en ce que les moyens pour escamoter les moyens de verrouillage comprennent des bras (72) sollicités en appui contre les loquets (18) par des moyens élastiques (76), de façon à amener une extrémité bombée (28a) des tiges escamotables (28) à l'intérieur des trous (38) formés dans les loquets, de telle sorte que les loquets peuvent alors tourner librement par rapport au boîtier qui les supporte.

7. Support selon l'une quelconque des revendications 5 et 6, caractérisé en ce que lesdites pièces (24) et le levier (92) sont montés pivotants sur le bloc support de genouillère, le levier portant au moins deux excentriques (88) contre lesquels lesdites pièces sont maintenues en appui par des moyens élastiques (86), de telle sorte que lesdites pièces occupent soit la position de connexion, soit la position de déconnexion, selon la position occupée par le levier.

8. Support selon la revendication 7, caractérisé en ce que lesdites pièces (24) occupent la position de déconnexion lorsque le levier (92) est en position haute et la position de connexion lorsque le levier est en position basse.

9. Support selon l'une quelconque des revendications 5 à 7, caractérisé en ce que les moyens de positionnement comprennent des encoches (68) dans lesquelles sont reçus des doigts (70) formés sur la genouillère (12).

10. Support selon l'une quelconque des revendications 5 à 9, caractérisé en ce que lesdites surfaces de butée (24b, 24c) sont formées par deux branches sensiblement rectilignes d'un décrochement (84) en forme de V formé dans chacune desdites pièces (24).

## Claims

1. Apparatus for the detachable connection of a support head (12) for a gripper (14) at the end of a slave arm (10) of a remote manipulator, said arm and said head each comprising a casing (10a, 12a) in which are located motion-transmission means (40a, 40b, 40c ; 50a, 50b, 50c) for the gripper, said connection apparatus being characterised in that it comprises at least two latches (18) pivotally mounted on one (12a) of the casings, said latches being adapted to occupy a connection position in which they engage fingers (20) fixed on the other casing (10a), whereby to connect the head to the end of the arm, and to occupy a disconnection position in which they are disengaged from said fingers whereby to disconnect the head, with retractable locking means (28) normally immobilising the latches with respect to the casing supporting them when the latches are in said connection position.

2. Apparatus according to claim 1, characterised in that the latches (18) are mounted on the casing (12a) of the head, and in that the fingers (20) are fixed to the casing (10a) of the arm.

3. Apparatus according to either of claims 1 and 2, characterised in that the motion-transmission means (40a, 40b, 40c) in the casing of the arm are of chain — or belt — type and each of the latter is held at the end of the arm on a toothed wheel (42a, 42b, 42c), or a pulley, fixed to a pinion (46a, 46b, 46c) engageable with a corresponding pinion (48a, 48b, 48c) within the casing of the head and connected to a corresponding motion-transmission means (50a, 50b, 50c) within the casing of the head.

4. Apparatus according to any one of the preceding claims, characterised in that the locking means comprise retractable rods (28) carried on the casing (12a) supporting the latches und urged by elastic means (32) into recesses (38) formed in the latches and located opposite said rods when the latches are in said connection position.

5. Detachment support for the connection apparatus according to any one of the preceding claims, characterised in that it comprises a support block (64) for the head carrying positioning means (68) for the head, and at least two members (24) adapted for displacement between a connection position and a disconnection position by means of a lever (92), said members having contact surfaces (24b, 24c) adapted to cooperate with the latches (18) of the connection apparatus to displace the latter towards the connection position when the head is withdrawn from the support and when said members are in the connection position, and towards the inverse position when the head is introduced into the support and said members are in the disconnection position, the support additionally comprising means (72) for retracting the locking means (28) when the head is held by the support.

6. Support according to claim 5, taken in combination with claim 4, characterised in that the means for retracting the locking means comprise arms (72) urged into contact with the latches (18) by elastic means (76), whereby to urge rounded ends (28a) of the retractable rods (28) into recesses (38) formed in the latches, such that the latches are able to turn freely with respect to the casing supporting them.

7. Support according to either of claims 5 and 6, characterised in that said members (24) and said lever (92) are pivotally mounted on the support block for the head, said lever carrying at least two cams (88) against which said members are held in contact by elastic means (86), whereby said members are in either the connection position or the disconnection position, according to the position of the lever.

8. Support according to claim 7, characterised in that said members (24) are in the disconnection position when the lever (92) is raised, and in the connection position when the lever is lowered.

9. Support according to any one of claims 5 to 7, characterised in that the positioning means comprises notches (68) for receiving the fingers (70) formed in the head (12).

10. Support according to any one of claims 5 to 9, characterised in that the contact surfaces (24b, 24c) are formed by two substantially straight edges of a V-form recess in each of said members (24).

## Patentansprüche

1. Vorrichtung zum lösbaren Verbinden eines Kniegelenks (12), das eine Greifvorrichtung (14) am Ende eines Manipulatorarms (10) trägt, wobei der Arm und das Kniegelenk jeweils ein Gehäuse (10a, 12a) enthalten, in welchem Einrichtungen (40a, 40b, 40c ; 50a, 50b, 50c) zum Übertragen von Bewegungen auf das Greiforgan angeordnet sind, wobei die Verbindungseinrichtung dadurch gekennzeichnet ist, daß sie wenigstens zwei Sperrklinken (18) enthält, die schwenkbar an einem (12a) der Gehäuse montiert sind, wobei die Sperrklinken dazu eingerichtet sind, eine Verbindungsstellung einzunehmen, in der sie an Zapfen (20) anliegen, die an dem anderen Gehäuse (10a) befestigt sind, um das Kniegelenk am Ende des Arms festzulegen, und eine Stellung einzunehmen, in der sie von den Zapfen gelöst sind, um das Kniegelenk zu lösen, und versenkbare Verriegelungseinrichtungen (28) enthält, die normalerweise die Sperrklinken gegenüber dem sie tragenden Gehäuse festlegen, wenn diese Sperrklinken die Verbindungsstellung einnehmen.

2. Vorrichtung nach Anspruch 1, dadurch gekennzeichnet, daß die Sperrklinken (18) an dem Gehäuse (12a) des Kniegelenks montiert sind und daß die Zapfen (20) an dem Gehäuse (10a) des Arms befestigt sind.

3. Vorrichtung nach einem der Ansprüche 1 und 2, dadurch gekennzeichnet, daß die Bewegungsübertragungseinrichtungen (40a, 40b, 40c), die in dem Gehäuse des Arms angeordnet sind, Ketten oder Rienen aufweisen, welchletztere jeweils am Ende des Arms von einem Kettenrad (42a, 42b, 42c) oder einer Rolle aufgenommen sind, das bzw. die fest mit einem Zahnrad (46a, 46b, 46c) verbunden ist, das in Eingriff mit einem entsprechenden Zahnrad (48a, 48b, 48c) gelangt, das im Gehäuse des Kniegelenks angeordnet und mit der entsprechenden Bewegungsübertragungseinrichtung (50a, 50b, 50c) im Gehäuse des Kniegelenks verbunden ist.

4. Vorrichtung nach einem der vorhergehenden Ansprüche, dadurch gekennzeichnet, daß die Verriegelungseinrichtungen versenkbare Stifte (28) aufweisen, die von dem Gehäuse (12a) gehalten sind, das die Sperrklinken trägt, und von elastischen Einrichtungen (32) in Löcher (38) gedrückt werden, die in den Sperrklinken ausgebildet sind und den Stiften gegenüberstehen, wenn die Sperrklinken die Verbindungsstellung einnehmen.

5. Abstützung für die gelöste Verbindungsvorrichtung nach einem der vorhergehenden Ansprüche, dadurch gekennzeichnet, daß sie einen Tragblock (64) für das Kniegelenk enthält, der Positioniereinrichtungen (68) für das Kniegelenk und wenigstens zwei Teile (24) umfaßt, die dazu eingerichtet sind, zwischen einer Verbindungsstellung und einer Lösestellung mittels eines Hebels (92) verstellt zu werden, wobei die genannten Teile Anschlagflächen (24b, 24c) aufweisen, die dazu eingerichtet sind, mit den Sperrklinken (18) der Verbindungsvorrichtung zusammenzuwirken, um letztere in die Verbindungsstellung zu bringen, wenn man das Kniegelenk von der Abstützung abnehmen will und damit die genannten Teile in die Verbindungsstellung gelangen, und um sie in die umgekehrte Stellung zu bewegen, wenn man das Kniegelenk in die Abstützung einführt und damit die genannten Teile in die Lösestellung gelangen, wobei die Abstützung darüber hinaus Einrichtungen (72) zum Versenken der Verriegelungseinrichtungen (28) aufweist, wenn das Kniegelenk sich in der Abstützung befindet.

6. Abstützung nach Anspruch 5 in Kombination mit Anspruch 4, dadurch gekennzeichnet, daß die Einrichtungen zum Versenken der Verriegelungseinrichtungen Arme (72) aufweisen, die gegen die Sperrklinken (18) durch elastische Einrichtungen (76) gedrückt werden, um ein abgerundetes Ende (28a) der versenkbaren Stifte (28) in den in den Sperrklinken ausgebildeten Löchern (38) so zu bewegen, daß sich die Sperrklinken dann frei gegenüber dem sie tragenden Gehäuse drehen können.

7. Abstützung nach einem der Ansprüche 5 und 6, dadurch gekennzeichnet, daß die genannten Teile (24) und der Hebel (92) schwenkbar an dem Tragblock des Kniegelenks montiert sind, wobei der Hebel wenigstens zwei Exzenter (88) trägt, an denen die genannten Teile durch elastische Einrichtungen (86) so in Anlage gehalten sind, daß die genannten Teile entweder die Verbindungsstellung oder die Lösestellung einnehmen, je nach der Stellung, die der Hebel einnimmt.

8. Abstützung nach Anspruch 7, dadurch gekennzeichnet, daß die genannten Teile (24) die Lösestellung einnehmen, wenn der Hebel (92) sich in hoher Stellung befindet, und die Verbindungsstellung einnehmen, wenn der Hebel sich in tiefer Stellung befindet.

9. Abstützung nach einem der Ansprüche 5 bis 7, dadurch gekennzeichnet, daß die Positioniereinrichtungen Ausnehmungen (68) aufweisen, die Zapfen (70) aufnehmen, die an dem Kniegelenk (12) ausgebildet sind.

10. Abstützung nach einem der Ansprüche 5 bis 9, dadurch gekennzeichnet, daß die genannten Anschlagflächen (24b, 24c)) von zwei im wesentlichen geradlinigen Schenkeln eines V-förmigen Winkels (84) gebildet sind, der an jedem der Teile (24) ausgebildet ist.

FIG. 1

FIG. 2

FIG. 3

0 104 118

FIG. 4        FIG.5